# EUROPÄISCHE PATENTANMELDUNG

(11) **EP 2 420 624 A2**
(43) Veröffentlichungstag der Anmeldung: **22.02.2012**
(21) Anmeldenummer: 11178165.4
(22) Anmeldetag: 19.08.2011
(51) Int. Cl.: E02D 7/10, E02D 7/20, E02D 7/26, E02D 27/42, E02D 27/52, E02D 13/04, F03D 11/04, F03D 1/00

(54) **Gründungsstruktur für eine Offshore-Windenergieanlage, sowie Verfahren zum Errichten dieser**

(30) Priorität: 20.08.2010 DE 102010035025; 20.08.2010 DE 102010035035
(71) Anmelder: Hilgefort GmbH Anlagenkomponenten und Apparatebau, 49413 Dinklage (DE)
(72) Erfinder: Baumfalk, Frank, 27801 Dötlingen (DE)
(74) Vertreter: Eisenführ, Günther

(57) **Zusammenfassung**

Die Erfindung betrifft eine Vorrichtung und ein Verfahren zum Errichten einer Gründungsstruktur für eine Offshore-Windenergieanlage mit zumindest mehreren Gründungspfählen, wobei jeder Gründungspfahl einen wenigstens abschnittsweise in seinem Inneren geführten Rammpfahl zur Verankerung im Meeresboden aufweist, und mit mindestens einer Stützkonstruktion zur Aufnahme eines Turms einer Windenergieanlage, wobei die Stützkonstruktion die oberen Enden der Gründungspfähle untereinander verbindet. Erfindungsgemäß wird vorgeschlagen, dass der Gründungspfahl (2, 3, 4) und der Rammpfahl (11, 12, 13) auf einem vorbestimmten Längenabschnitt einen Bereich einer Überdeckung aufweisen, wobei im Überdeckungsbereich (25) der Pfähle der Spalt (29) zwischen den Pfählen sowie in einem Teilstück unterhalb und oberhalb des Überdeckungsbereiches (25) der freie, innere Querschnitt der Pfähle (2, 3, 4, 11, 12, 13) mit einem aushärtenden Füllmaterial (30) verfüllt sind.

Die Erfindung betrifft ferner ein Ausrichtwerkzeug.

## Beschreibung

Die Erfindung bezieht sich auf eine Gründungsstruktur für eine Offshore-Windenergieanlage, mit zumindest mehreren Gründungspfählen, wobei jeder Gründungspfahl einen abschnittsweise in seinem Inneren geführten Rammpfahl zur Verankerung im Meeresboden aufweist, und mit mindestens einer Stützkonstruktion zur Aufnahme der Windenergieanlage, wobei die Stützkonstruktion die oberen Enden der Gründungspfähle untereinander verbindet.

Des Weiteren bezieht sich die Erfindung auch auf ein Verfahren zum Errichten einer Gründungsstruktur für eine Offshore-Windenergieanlage.

Bekannte Gründungsstrukturen für Wasserbauwerke, wie zum Beispiel für Offshore-Windenergieanlagen, bilden Üblicherweise den Übergang vom Bauwerk zum Boden aus, im vorliegenden Fall vom Wasserbauwerk zum Meeresboden, und sollen eine sichere Verankerung im Meeresboden gewährleisten. Speziell Offshore-Windenergieanlagen werden zunehmend in einiger Entfernung zur Küste und dadurch häufig in Wassertiefen von bis zu 50 Metern aufgestellt. Aufgrund der an einem solchen Aufstellort vorherrschenden Umgebungsbedingungen und den damit in der Regel auf die Gründungsstruktur und das Wasserbauwerk einwirkenden Wind- und Wellenlasten, werden entsprechend hohe Anforderungen an die Verankerung der Gründungsstruktur im Meeresboden und die das Wasserbauwerk tragende Gründungsstruktur selbst gestellt.

In der EP 1 673 536 B1 ist beispielsweise eine Gründungsstruktur für eine Offshore-Windenergieanlage beschrieben, welche mehrere Gründungspfähle mit jeweils im Inneren der Gründungspfähle wenigstens abschnittsweise geführten Rammpfählen zur Verankerung im Meeresboden aufweist. Die Gründungsstruktur weist des Weiteren mindestens eine Stützkonstruktion zur Aufnahme des Turmes der Windenergieanlage auf, wobei die Stützkonstruktion die oberen Enden der Gründungspfähle untereinander verbindet. Dabei ist nach dem Rammen der Rammpfähle ein vorgegebener Längenabschnitt erzeugt, in dem die Rammpfähle von den Gründungspfählen aufgenommen sind. Um die Relativbewegung zwischen den Gründungspfählen und den Rammpfählen zu unterbinden und dadurch möglicherweise ein Lockern der Verankerung der Gründungsstruktur im Meeresboden zu verursachen, wird ein Teilabschnitt des Überdeckungsbereiches zwischen der Außenseite des Rammpfahles und der Innenseite des Gründungspfahles verklebt. Durch die relativ schmale Verklebung zwischen der Außenseite des Gründungspfahles und der Innenseite des Rammpfahles besteht zum einen das Risiko, dass die Verklebung reißt und somit der Rammpfahl wieder beweglich zum Gründungspfahl ist. Zum anderen wirkt im Bereich des Meeresbodens das größte durch Wind- und Wellenlasten hervorgerufene Moment auf die Gründungs- und Rammpfähle der Gründungsstruktur, so dass es durch die ständigen Lastwechsel kurz unterhalb des Überdeckungsbereiches der Pfähle zur Verformung und gegebenenfalls zum Knicken der Wandungen der Rammpfähle kommen kann, was sich in jedem Fall nachteilig auf deren Verankerung und damit auf die betriebssichere Langzeitfunktion der Gründungsstruktur auswirken kann.

Der Erfindung liegt daher die Aufgabe zugrunde, eine Gründungsstruktur vorbezeichneter Gattung dahingehend zu verbessern, dass Verformungen an den Pfählen, aufgrund der wirkenden Lastwechsel vermieden sind. Des Weiteren liegt der Erfindung die Aufgabe zugrunde, ein Verfahren zum Errichten einer Gründungsstruktur für ein Wasserbauwerk aufzuzeigen, das auf vereinfachte und sichere Weise durchgeführt werden kann, insbesondere ein Verfahren zum Errichten einer Gründungsstruktur mittels dem die Gründungsstruktur vereinfacht ausrichtbar ist.

Die Lösung der Aufgabe erfolgt erfindungsgemäß durch eine Gründungsstruktur mit den Merkmalen des Patentanspruches 1 und durch ein Verfahren gemäß Patentanspruch 9. Vorteilhafte Weiterbildungen und Ausgestaltungen der Erfindung sind in den sich jeweils auf die Patentansprüche 1 und 9 rückbeziehenden Unteransprüchen angegeben.

Bei einer Gründungsstruktur für eine Offshore-Windenergieanlage mit zumindest mehreren Gründungspfählen, wobei jeder Gründungspfahl einen wenigstens abschnittsweise in seinem Inneren geführten Rammpfahl zur Verankerung im Meeresboden aufweist, und mit mindestens einer Stützkonstruktion zur Aufnahme des Turms einer Windenergieanlage, wobei die Stützkonstruktion die oberen Enden der Gründungspfähle untereinander verbindet, ist vorgesehen, dass der Gründungspfahl und der Rammpfahl auf einem vorbestimmten Längenabschnitt einen Bereich einer Überdeckung aufweisen, wobei im Überdeckungsbereich der Pfähle zumindest abschnittsweise der Spalt zwischen den Pfählen sowie über einen Abschnitt des Überdeckungsbereiches und in einem Teilstück unterhalb des Überdeckungsbereiches der freie, innere Querschnitt des Rammpfahles mit einem aushärtenden Füllmaterial verfüllt ist.

Mit Hilfe einer derartig festen Struktur um den Überdeckungsbereich der Gründungspfähle und der von den Gründungspfählen bereichsweise aufgenommenen Rammpfähle ist insbesondere ein Knicken oder Beulen der Pfahlwandungen im Bereich des Meeresbodens durch das innerhalb des Rammpfahles und des zwischen Gründungspfahl und Rammpfahles abschnittsweise ausgehärtete Füllmaterial auf vorteilhafte Weise vermieden. Das bis unterhalb des Überdeckungsbereiches im Inneren des Rammpfahles reichende Füllmaterial verleiht diesem über ein vorbestimmtes Teilstück eine optimale Steifigkeit, wodurch die Ausgestaltung des Rammpfahles aus einem einwandigen Rohr möglich ist. Durch das bevorzugt jeweils von unterhalb bis oberhalb des Überdeckbereiches reichende, aushärtende Füllmaterial, wie zum Beispiel Beton, ist mit Vorteil eine Gründungsstruktur erzeugt, mittels der sich problemlos eine betriebssichere Langzeitfunktion von den mindestens geforderten 20 Jahren gewährleisten lässt.

Mit Vorteil ist nach einer Weiterbildung der Erfindung vorgesehen, dass der Gründungspfahl im Fußbereich eine seinen freien Querschnitt an der inneren Mantelfläche verringernde Führung für den Rammpfahl aufweist. Die Verwendung einer Führung hat den Vorteil, dass der Rammpfahl während des Rammens insbesondere zu Beginn der Rammarbeiten axialbeweglich geführt ist, so dass der Rammpfahl mit seiner Mittenachse vorzugsweise koaxial zur Mittenachse des Gründungspfahles in den Meeresboden getrieben wird. Ein Verlaufen des Rammpfahles soll somit vorteilhaft vermieden werden. Die Führung ist dabei etwa über die Hälfte des Überdeckungsbereiches der beiden Pfähle im Spalt zwischen der Innenseite des Gründungspfahles und der Außenseite des Rammpfahles zumindest bereichsweise über den Umfang ausgebildet. Die Führung kann beispielsweise als Buchse ausgebildet sein. Bevorzugt werden mehrere Bleche eingesetzt, deren Längsachsen parallel zur Mittenachse des Gründungspfahles verlaufen und sich radial von der Innenseite des Gründungspfahles in Richtung der Mittenachse erstrecken.

Der Gründungspfahl weist optional einen Bodenring mit einer den Spalt zum Rammpfahl abdichtenden Dichtung auf, wodurch zum einen während und nach dem Rammen das Eindringen von Meerwasser, sowie Schlamm- oder Gesteinsteilen insbesondere in den Spalt im Bereich der Führung vermieden ist. Somit ist eine ungewollte Verschmutzung des nach-folgend auszubetonierenden Abschnitts von Gründungspfahl und Rammpfahl ausgeschlossen. Zum anderen verhindert die Dichtung im Bereich des Spaltes ebenfalls das Austreten des nachträglich eingebrachten Füllmaterials. Das aushärtende Füllmaterial verbleibt somit stets auf gleichem Niveau im Spalt zwischen Gründungspfahl und Rammpfahl und kann dementsprechend eine feste Verbindung mit den Oberflächen der jeweiligen Pfahlwandungen eingehen. Zur Ausbildung der am Bodenring vorgesehenen Dichtung kann beispielsweise ein Filz oder anderes geeignetes Material zum Einsatz kommen, das geeignet ist, um einen Wassereintritt oder das Eindringen von Schlamm auszuschließen. Auf dem Bodenring kann des Weiteren von unten eine Berstscheibe aufgesetzt sein, welche den freien Querschnitt des vorzugsweise als Rohr ausgebildeten und damit unten offenen Rammpfahles wirkungsvoll verschließt und somit das Eindringen von Meerwasser bereits beim Absenken des zur Ausbildung der Gründungsstruktur dienenden Konstruktionsteiles auf den Meeresboden verhindert: Bereits beim Aufsetzen des Konstruktionsteiles auf den Meeresboden, jedoch spätestens mit dem Beginn der Rammarbeiten wird die Berstscheibe durch den vorzugsweise senkrecht nach unten getriebenen Rammpfahl zerstört, welche dabei kein Hindernis für die durchzuführenden Rammarbeiten darstellt.

Alternativ kann es vorteilhaft sein, keine Dichtung vorzusehen. So kann Wasser bei einem Absenken der Gründungsstruktur von einem Schiff aus auf den Meeresboden kontrolliert und gleichmäßig in die Gründungspfähle eindringen. Die Gefahr, dass durch ein plötzlich auftretendes Leck in einem abgedichteten Gründungspfahl eine plötzliche Schwerpunktverschiebung und somit ein Kippen der Gründungsstruktur auftritt, wird verringert. Die Dichtung sowie die Berstscheibe kann dann entfallen.

Der Gründungspfahl weist vorzugsweise ein seine innere Mantelfläche ausbildendes Innenrohr und ein seine äußere Mantelfläche ausbildendes Außenrohr auf, wobei zwischen Innenrohr und Außenrohr ein Kernwerkstoff angeordnet ist. Mit einem derartig erfindungsgemäßen Wandungsaufbau ist eine konstruktiv vorteilhafte Möglichkeit zur Ausbildung der Gründungspfähle erreicht. Durch den Sandwich-Aufbau der Pfahlwandung ist zum einen die Steifigkeit des Gründungspfahles verbessert und zum anderen kann die Menge des üblicherweise zur Ausbildung des Gründungspfahls verwendeten Stahls vorteilhaft verringert werden. Durch die erhöhte Steifigkeit lassen sich sowohl die Durchmesser als auch die Gesamtstärke des Innen- und Außenrohres deutlich minimieren, was gleichzeitig die Wirtschaftlichkeit solcher erfindungsgemäßer Gründungsstrukturen, aufgrund reduzierter Fertigungs- und Materialkosten, auf vorteilhafte Weise verbessert. Der Kernwerkstoff als Zwischenlage zwischen Innen- und Außenrohr wird insbesondere zusätzlich mit Bewehrung verstärkt, welche als Betonstabstahle oder in Form eines hohlzylindrischen Gitters im Kernwerkstoff angeordnet ist. Dabei ist vorgesehen, dass die Bewehrung stets vollständig vom Kernwerkstoff eingeschlossen und im Abstand zur Innenseite des Außenrohres und zur Außenseite des Innenrohres angeordnet ist.

Mit Vorteil ist nach einer Weiterbildung der Erfindung vorgesehen, dass der Rammpfahl ein im Abstand unterhalb des Überdeckungsbereiches angeordnetes Schott aufweist, welches den freien, inneren Querschnitt des Rammpfahles versperrt. Mit Hilfe eines derartigen Schotts ist beim Rammen des Rammpfahles das Eindringen von Wasser oder Schlamm über den hohlzylindrisch ausgebildeten Rammpfahl in das Innere des Gründungspfahles vermieden, so das der freie Querschnitt des Rammpfahles nur bis zum Schott mit Meeresboden gefüllt ist. Des Weiteren dient das Schott als Füllgrenze für das in den Rammpfahlkopf einzufüllende Füllmaterial, welches darin aushärtet und dem Rammpfahl eine verbesserte Steifigkeit verleiht. Das Schott ist insbesondere ein Plattenkörper, welcher mit seiner Plattenebene senkrecht zur Mittenachse des Rammpfahles verläuft und umlaufend mit der Innenseite der Rammpfahlwandung abdichtend verbunden, insbesondere verschweißt, ist. Das Schott ist dabei etwa in einem Abstand unterhalb des Gründungspfahlendes angeordnet, der der Länge der Überdeckung der Pfähle entspricht.

Um einen übermäßigen Druckaufbau im Inneren des Rammpfahles und somit eine unnötige Gegenkraft beim Rammen zu vermeiden, ist eine Entlüftung aus dem Rammpfahlinneren vorzusehen. Zu diesem Zweck weist der Rammpfahl in seiner Pfahlwandung unterhalb des Schotts mindestens einen Durchbruch auf. Beim Rammen kann dementsprechend im Rammpfahl befindliche Luft entweichen, so dass die Bestandteile des Meeresbodens im freien Querschnitt des Rammpfahles bis unterhalb des Schotts aufsteigen können. Dabei ist es von Vorteil, wenn unterhalb des Schotts mehrere Durchbrüche über die Länge des Rammpfahles und gleichzeitig mehrere Durchbrüche in der Pfahlwandung auf gleichem Höhenniveau auf dem Umfang des Rammpfahles verteilt angeordnet sind. Jeder Durchbruch zur Entlüftung in der Pfahlwandung des Rammpfahles kann zudem mit einem geeigneten Material abgedichtet sein, dass sich beispielsweise beim Kontakt mit Wasser auflöst und somit die Durchbrüche in der Pfahlwandung in Längsrichtung nacheinander zur Entlüftung freigegeben.

Der Rammpfahl weist in einer optionalen Gestaltung an seiner äußeren Mantelfläche einen sich radial nach außen erstreckenden Absatz als Anschlag an der Führung des Gründungspfahles auf, mit Hilfe dem der Rammpfahl in Längsrichtung formschlüssig mit insbesondere den die Führung ausbildenden Blechen an der Innenseite des Gründungspfahles in Anlage gebracht wird und eine Haltekraft auf den Gründungspfahl senkrecht nach unten ausübt. Der sich ringförmig entlang der Mantelfläche des Rammpfahles erstreckende Absatz ist insbesondere beabstandet zum oberen Ende des Rammpfahles angeordnet, so dass stets ein bestimmter Abschnitt des Rammpfahles oberhalb der Führung frei in den Gründungspfahl hineinsteht. Dadurch ist ein Spalt zwischen Außenseite des Rammpfahles und Innenseite des Gründungspfahles erzeugt, in den dann das Füllmaterial eingegeben werden kann. Die sich radial nach außen erstreckende Umfangsfläche des Absatzes kann gleichzeitig als Führungsfläche zum Abstützen an der Innenseite des Gründungspfahles ausgebildet sein. Damit ist die Führung des Rammpfahles innerhalb des Gründungspfahles weiter verbessert und gleichzeitig ein Verlaufen des Rammpfahles beim Rammen mit Vorteil vermieden. Der Absatz kann insbesondere ein flanschartiger Ringkörper sein, welcher mit der äußeren Mantelfläche des Rammpfahles verschweißt ist.

Eine andere Weiterbildung der Erfindung sieht vor, dass der Rammpfahl zumindest abschnittsweise auf der Innenseite der Pfahlwandung mit Bewehrung ausgerüstet ist. Mit Hilfe der Bewehrung wird insbesondere das nachträglich eingebrachte Füllmaterial verstärkt, wobei darüber hinaus dessen Zugfestigkeit erhöht wird und somit die Belastbarkeit der Pfähle im Bereich des Meeresbodens deutlich verbessert ist. Speziell dynamisch auf die Gründungsstruktur einwirkende Kräfte lassen sich problemlos von der verstärkten Bauteilstruktur der Gründung aufnehmen. Als Bewehrung kommt insbesondere Betonstahl in Form von Stäben zum Einsatz, welche auf einem vorbestimmten Teilkreisdurchmesser beabstandet zur Innenseite des Rammpfahles angeordnet sind. An Stelle von einzelnen Stäben kann ebenfalls auch ein zylindrischer Bewehrungskorb verwendet werden, der ähnlich einem Gitternetz auf einem gleichmäßigen Radius um die Mittenachse des Rammpfahles verläuft.

Eine Weiterbildung der Erfindung sieht vor, dass neben den Gründungspfählen mindestens ein weiterer Teilbereich als wenigstens ein Rohrabschnitt eines Stabes der sich aus mehreren Stäben zusammensetzenden fachwerkartigen Stützkonstruktion ausgebildet ist. Dadurch ist auf vorteilhafte Weise ebenfalls eine erhöhte Festigkeit der die oberen Enden untereinander verbindenden fachwerkartigen Stützkonstruktion erreicht, mittels der die Windenergieanlage aufgenommen ist und eine direkte Verbindung zwischen der Gründungsstruktur und dem Turm der Windenergieanlage ausgebildet ist. Durch die erfindungsgemäße Ausbildung von Rohrabschnitten der in der Stützkonstruktion zum Einsatz kommenden Stäbe, kann die Anzahl der Stäbe, aufgrund der verbesserten Steifigkeit, verringert werden. Damit ist auch im Bereich der Stützkonstruktion bei einer gleichzeitig verbesserten Steifigkeit derselbigen auf vorteilhafte Weise eine Materialeinsparung an Stahl erzielt. Die zur Ausbildung der fachwerkartigen Stützkonstruktion eingesetzten Stäbe weisen insbesondere einen zylindrischen Querschnitt auf, wobei die erfindungsgemäße Ausgestaltung der Wandung sich sowohl über die gesamte Länge eines Stabes erstrecken kann als auch nur auf einem bestimmten Stab- bzw. Rohrabschnitt ausgebildet ist.

Jeder Rohrabschnitt ist an wenigstens einem seiner Endbereiche mit einem Schott ausgerüstet, welches zumindest seinen inneren freien Querschnitt abdichtend verschließt. Damit ist insbesondere das Eindringen von Feuchtigkeit in das Innere des freien Rohrabschnittes bereits vor der Montage zu einer die Gründungspfähle verbindenden Stützkonstruktion vermieden. Des Weiteren kann das Schott zusätzlich als Füllbegrenzung für ein im Bereich der erzeugten Knotenpunkte der Stützkonstruktion eingebrachtes Füllmaterial dienen. Das Schott kann in diesem Zusammenhang ein kreisförmiger Plattenkörper sein, der mit seinem Umfang mit der Innenseite des Innenrohres stoffschlüssig verbunden, beispielsweise verschweißt, sein kann.

Darüber hinaus ist vorgesehen, dass jeder Rohrabschnitt eine sein Schott endseitig überragende Bewehrung aufweist. Der beispielsweise zwischen Außen und Innenrohr des Rohrabschnittes zum Einsatz kommende Bewehrungsstahl steht dementsprechend über das Schott in einen sich möglicherweise auf beiden Seiten der Enden des Rohrabschnittes des Stabes der Stützkonstruktion ausbildenden Füllraum für darin einzubringendes Füllmaterial vor. Beim Einsatz eines aushärtenden Füllmaterials gehen dann die überstehenden Abschnitte der Bewehrung des Rohrabschnittes nach dem Abbindevorgang, eine stoffschlüssige Verbindung mit dem ausgehärteten Füllmaterial ein.

Jeder Rohrabschnitt weist an mindestens einer seiner Stirnseiten eine ringförmige Verbindungsfläche auf, welche in einer Ebene verläuft, die senkrecht zur Mittenachse des Rohrabschnittes ausgerichtet ist. Ein jeweiliger, den erfindungsgemäßen Sandwich-Aufbau aufweisender Rohrabschnitt hat demzufolge stets senkrecht zu seiner Mittenachse verlaufende, gerade Enden. Über die geraden Enden mit jeweils einer Verbindungsfläche an den Stirnseiten kann jeder erfindungsgemäße Rohrabschnitt mit den Enden eines jeweiligen Stabes ausbildenden Anschlussrohrstücken verbunden sein. Die Verbindung einer jeweils einzeln vorgefertigten Rohrabschnittes mit einem herkömmlich ausgeführten Anschlussrohrstück kann dabei vorteilhaft einfach mit Hilfe von Orbitalschweißgeräten erfolgen, wobei Rohrabschnitt und Anschlussrohrstück zur Ausbildung eines Stabes der Stützkonstruktion insbesondere miteinander verschweißt werden.

Eine andere Weiterbildung der Erfindung sieht vor, dass jeder Rohrabschnitt mit parallel zu seiner Mittenachse wirkenden Spannelementen ausgerüstet ist, welche zum Überspannen mindestens eines im Verbindungsbereich zweier Bauteile der Gründungsstruktur ausbildenden Knotenpunktes vorgesehen sind. Die Verwendung von Spannelementen im Bereich eines Knotenpunktes hat den Vorteil, dass ein jeweiliger, erfindungsgemäßer Rohrabschnitt mittels der insbesondere als Spannstäbe ausgebildeten Spannelemente in Richtung eines Knotenpunktes gezogen wird. Sich im Stauchungsbereich befindliche Schweißnähte sind somit verringerten Lastwechseln ausgesetzt, wodurch gleichzeitig deren Ermüdungsverhalten mit Vorteil verringert ist. An einem Rohrabschnitt kommen eine Vielzahl von Spannstäben zum Einsatz, welche gleichmäßig auf einem Teilkreisdurchmesser nahe der Rohrwandung des Rohrabschnittes angeordnet sind. Dadurch ist stets eine vorteilhafte Krafteinleitung im Bereich der Knotenpunkte sichergestellt. Die Spannstäbe können beispielsweise mit ihrem kopfseitigen Ende an einem Schott in einem jeweiligen Endbereich des Rohrabschnittes angeordnet sein. Die dabei bevorzugt als Spannstäbe ausgebildeten Spannelemente erstrecken sich ebenfalls parallel zur Mittenachse eines jeweiligen Stabes der Stützkonstruktion bis zum Beispiel in einem Rohrabschnitt eines unter einem Winkel dazu verlaufenden Stabes oder eines Gründungspfahles hinein.

Weiterhin ist ein Verfahren zum Errichten einer Gründungsstruktur für ein Wasserbauwerk vorgesehen, insbesondere für eine Offshore-Windenergieanlage, bei dem mehrere mit Rammpfählen ausgerüstete Gründungspfähle mit mindestens einer aus Stäben bestehenden Stützkonstruktion zu einem Konstruktionsteil vormontiert werden, das vormontierte Konstruktionsteil zum Aufstellort transportiert und mit seinen Gründungspfählen voran auf dem Meeresboden abgesetzt wird, anschließend werden die Rammpfähle in den Meeresboden gerammt und ein im Meeresboden verankertes Gründungsteil erzeugt, und abschließend in das Gründungsteil ein aushärtendes Füllmaterial in zumindest den Überdeckungsbereich der Pfähle eingefüllt und somit eine feste Gründungsstruktur ausgebildet wird.

Alternativ wird die Gründungsstruktur bzw. das Gründungsteil erst nach dem Aufstellen der Gründungspfähle sowie nach dem Rammen der Rammpfähle mit der Stützkonstruktion verschweißt. Vorzugsweise sind dazu Verbindungskörper vorgesehen, mittels denen die Stützkonstruktion mittels Orbitalschweißen mit den Gründungspfählen verbindbar ist.

Mit Hilfe der erfindungsgemäßen Verfahrensschritte und deren gezielt durchgeführten Abfolge kann eine Gründungsstruktur auf vereinfachte aber zugleich sichere Art und Weise hergestellt werden. Die Vormontage der Gründungspfähle und der jeweils darin aufgenommenen Rammpfähle mit der Stützkonstruktion zu einem fertigen Konstruktionsteil erfolgt bevorzugt noch an Land, so dass hier eine relativ genaue Vormontage gewährleistet ist. Das fertige Konstruktionsteil wird dann auf eine schwimmende Plattform gehoben und mittels dieser an den vorbestimmten Aufstellort transportiert. Das noch relativ leichte Konstruktionsteil mit seinen Pfählen und den Stützkonstruktionen wird dann mit einem Hebezeug, beispielsweise einem Schwimmkran, in einem Stück von der Plattform angehoben und mit den Gründungspfählen senkrecht nach unten weisend abgesenkt, bis die Gründungspfähle den Meeresboden berühren. Nach dem Absenken werden mit einer Slenderramme nacheinander die Rammpfähle in den Meeresboden gerammt, wodurch eine feste Verankerung des Konstruktionsteiles erreicht ist und somit ein Gründungsteil erzeugt ist. Abschließend wird in zumindest den Überdeckungsbereich der Pfähle ein aushärtendes Füllmaterial, wie zum Beispiel Beton, eingefüllt. Vorzugsweise wird das Füllmaterial sowohl in den freien Querschnitt des Rammpfahles in einen Abschnitt unterhalb des Überdeckungsbereiches der Pfähle bis in einen Bereich oberhalb des Überdeckungsbereiches eingefüllt, so dass gleichzeitig auch in den Spalt oberhalb der Führung des Gründungspfahles das Füllmaterial zwischen Rammpfahl und Gründungspfahl hineinläuft. Nach dem Aushärten des Füllmaterials ist eine derartig feste Gründungsstruktur geschaffen, die problemlos die auf die Gründungsstruktur einwirkenden dynamischen Lastwechsel von Wind oder Wellen problemlos aufnimmt.

Nach einer Weiterbildung der Erfindung kann es vorgesehen sein, dass nach dem Rammen das aushärtende Füllmaterial ebenfalls in einen Spalt zwischen einem Innenrohr und einem Außenrohr eines jeweiligen Gründungspfahls eingefüllt und danach die oberen Enden der Gründungspfähle verschlossen werden. Das nachträgliche Einbringen des Füllmaterials zwischen Innen- und Außenrohr hat im Gegensatz zu einem bereits bei der Vormontage erfolgten Einbringen des Füllmaterials als Kernwerkstoff zwischen Innen- und Außenrohr den Vorteil, dass das Konstruktionsteil ein geringeres Eigengewicht aufweist und somit beim Verladen auf eine schwimmende Plattform und beim Aufstellvorgang vereinfacht angehoben und ausgerichtet werden kann.

In einer bevorzugten Weiterbildung des Verfahrens oder in einem weiteren Aspekt der Erfindung wird die eingangs genannte Aufgabe gelöst durch ein Verfahren zum Errichten einer Gründungsstruktur für eine Offshore-Windenergieanlage, bei dem mehrere, vorzugsweise drei, mit Rammpfählen ausgerüstete Gründungspfähle mit mindestens einer aus Stäben bestehenden Stützkonstruktion zu einem Konstruktionsteil vormontiert werden, das vormontierte Konstruktionsteil zum Aufstellort transportiert und mit seinen Gründungspfählen voran auf dem Meeresboden abgesetzt wird, anschließend die Rammpfähle in den Meeresboden gerammt und ein im Meeresboden verankertes Gründungsteil erzeugt wird, wobei das Verfahren den Schritt aufweist: Ausrichten des Gründungsteils derart, dass eine Zentralachse der Zentralaufnahme für die Aufnahme des Turms einer Windenergieanlage im Wesentlichen vertikal ausgerichtet ist. Ein Einfüllen von Füllmaterial erfolgt vorzugsweise im Anschluss an das Ausrichten. Vorzugsweise erfolgt das Ausrichten des Gründungsteils bzw. der Gründungsstruktur derart, dass eine Winkelabweichung zwischen der Zentralachse der Zentralaufnahme und einer Vertikalen kleiner als 2°, vorzugsweise kleiner als 1 °, insbesondere kleiner als 0,5° ist. In der Zentralaufnahme wird der Turm einer Offshore-Windenergieanlage aufgenommen. Windenergieanlagen weisen einen hohen Turm auf, der 100 m übersteigen kann. Daher ist es erforderlich, dass die Gründungsstruktur im Wesentlichen vertikal ausgerichtet ist, so dass die Winkelabweichungen gering sind. Nur so ist eine Windenergieanlage mittels der Gründungsstruktur sicher aufstellbar. Beim Rammen der Rammpfähle in den Meeresboden kommt es vor, dass dieser stellenweise einsinkt, so dass die auf diesem aufgestellte Gründungsstruktur nicht exakt vertikal ausgerichtet ist. Bisherige Verfahren sehen daher teilweise vor, die Zentralaufnahme am oberen Ende der Stützkonstruktion der Gründungsstruktur nachträglich anzupassen. Ein solches Anpassen umfasst insbesondere das Herstellen spezieller Verbindungsflansche, die die Winkelungenauigkeiten ausgleichen. Dies ist allerdings sehr aufwändig und erfordert zusätzliche Arbeitsschritte und Material. Auch entstehen so zusätzliche Verbindungsstellen zwischen der Gründungsstruktur und der aufzunehmenden Windenergieanlage, welche später zu einer Ermüdung der Gründungsstruktur führen können. Indem das Gründungsteil bzw. die Gründungsstruktur ausgerichtet wird, entfallen derartige aufwändige Maßnahmen, wie insbesondere das Fertigen von Verbindungsflanschen.

Vorzugsweise umfasst das Ausrichten ein Verschieben wenigstens eines, vorzugsweise zwei der drei Gründungspfähle relativ zu dem Rammpfahl mittels eines vollständig innerhalb und/oder oberhalb des Gründungspfahls angeordneten Ausrichtstempels. Ein derartiger Ausrichtstempel ist vorzugsweise als Ausrichteinrichtung ausgebildet oder weist eine solche auf. Weist die Gründungsstruktur drei Gründungspfähle auf, wie besonders bevorzugt, lässt sich diese durch Verschieben zweier der drei Gründungspfähle relativ zu den entsprechenden Rammpfählen ausrichten. Die Gründungspfähle werden demnach entlang der eingerammten Rammpfähle um eine Differenz verschoben, so dass die angehobenen Gründungspfähle dann nicht mehr auf dem Meeresboden aufstehen. Der Ausrichtstempel, mittels dem der entsprechende Gründungspfahl angehoben wird, ist dabei vollständig innerhalb und/oder oberhalb des Gründungspfahls angeordnet. Er kann auch im Wesentlichen im Gründungspfahl angeordnet sein und an einer Oberseite des Gründungspfahls aus diesem herausstehen. Die Gründungspfähle reichen vom Meeresboden bzw. kurz oberhalb des Meeresbodens bis über den Meeresspiegel. Indem der Ausrichtstempel im Wesentlichen innerhalb und/oder oberhalb des Gründungspfahls angeordnet ist, ist dieser keiner Strömung und keinem Wellenschlag ausgesetzt, so dass das Positionieren eines derartigen Stempels und das Arbeiten an diesem wesentlich vereinfacht sind.

In einer bevorzugten Weiterbildung umfasst das Verfahren ferner die Schritte: Einführen des Ausrichtstempels von einem oberen Ende des Gründungspfahls, welche sich oberhalb des Meeresspiegels befindet, in den Gründungspfahl hinein, In-Kontakt-Kommen eines Stempelkopfes des Ausrichtstempels mit dem Rammpfahl; In-Eingriff-Bringen einer Stützeinrichtung des Ausrichtstempels mit dem Gründungspfahl; und Strecken eines Abschnitts des Ausrichtstempels, um den Gründungspfahl relativ zu dem Rammpfahl zu verschieben. Nachdem die Gründungsstruktur mit den Gründungspfählen auf den Meeresboden aufgesetzt wurde und die Rammpfähle wenigstens teilweise, vorzugsweise vollständig, eingerammt wurden, wird der Ausrichtstempel von dem oberen offenen Ende des Gründungspfahls her in diesen eingeführt. Dabei wird der Ausrichtstempel vorzugsweise mit einem Stempelkopf voran in den Gründungspfahl hineingeführt. Der Stempelkopf weist einen Kontaktabschnitt auf, mit dem dieser mit dem Rammpfahl in Kontakt kommt, um sich an diesem abzustützen. Dies ist vorteilhaft, da der Rammpfahl nach dem Einrammen ortsfest ist und nicht nachgibt, so dass er einen vorteilhaften Abstützpunkt für den Ausrichtstempel bildet. Der Ausrichtstempel weist ferner eine Stützeinrichtung auf, die dazu angepasst ist, mit dem Gründungspfahl in Kontakt zu kommen. Mittels der Stützeinrichtung ist der Gründungspfahl an dem Ausrichtstempel abstützbar. Dazu weist der Gründungspfahl vorzugsweise einen Stützabschnitt auf, der beispielsweise als radial nach innen vorspringender Ansatz ausgebildet sein kann. Nachdem der Stempelkopf in Kontakt mit dem Rammpfahl gekommen ist und die Stützeinrichtung mit dem Gründungspfahl in Eingriff gebracht wurde, wird der Ausrichtstempel oder wenigstens ein Abschnitt von diesem gestreckt, derart, dass der Gründungspfahl relativ zu dem Rammpfahl nach oben bezogen auf eine übliche Aufstellrichtung verschoben wird. Das Strecken erfolgt bevorzugt hydraulisch. Dazu weist der Ausrichtstempel bevorzugt wenigstens einen Hydraulikzylinder auf, mittels denen der Gründungspfahl angehoben bzw. zu dem Rammpfahl verschoben wird. Die Hydraulikzylinder können beispielsweise als Teil der Stützeinrichtung ausgebildet sein, so dass der Gründungspfahl auf den Hydraulikzylindern abgestützt wird. Alternativ zu den Hydraulikzylindern können auch Schraubspindeln, Zahnstangenantriebe, Seilzüge und dgl. zum Einsatz kommen.

Vorzugsweise umfasst das Verfahren ferner den Schritt Einfüllen von Füllmaterial durch einen Kanal in dem Ausrichtstempel hindurch in den Rammpfahl und/oder in den Überdeckungsbereich zwischen Rammpfahl und Gründungspfahl. Der Ausrichtstempel ist beim Ausrichten in dem Gründungspfahl angeordnet und der angehobene Gründungspfahl ist an dem Ausrichtstempel abgestützt, welcher sich auf dem Rammpfahl abstützt. Zum abschließenden Fixieren der verschobenen Positionen des Gründungspfahls und des Rammpfahls zueinander ist es bevorzugt, Füllmaterial wenigstens in den Zwischenraum zwischen Rammpfahl und Gründungspfahl einzufüllen, vorzugsweise auch in das Innere des Rammpfahls, sowie in einen Abschnitt unterhalb des Überdeckungsbereichs und oberhalb des Überdeckungsbereichs zwischen Rammpfahl und Gründungspfahl. Indem der Ausrichtstempel einen Kanal aufweist, durch den Füllmaterial einfüllbar ist, wird dieses vorteilhaft an die erforderlichen Stellen geleitet. Zusätzliche Rohre, Schläuche und dgl. können entfallen. Dadurch ist das Errichten der Gründungsstruktur weiter vereinfacht.

Gemäß einer weiteren bevorzugten Ausführungsform des Verfahrens weist dieses den Schritt auf: Verschließen, vorzugsweise luftdichtes Versiegeln, des oberen offenen Endes wenigstens eines Gründungspfahls mittels einer Verschlusseinrichtung. Zuvor werden vorzugsweise der Ausrichtstempel sowie weitere in dem Gründungspfahl befindliche Elemente und Werkzeuge aus diesem entfernt. Durch das Verschließen, insbesondere luftdichtes Versiegeln, wird verhindert, dass Wasser, insbesondere sauerstoffreiches Wasser, in das Innere des Gründungspfahls eindringen kann, und dass ein Luftaustausch zwischen einem Innenraum des Gründungspfahls und einer Umgebung erfolgt. So wird verhindert, dass dem Innenraum des Gründungspfahls weiterer Sauerstoff zugeführt wird, wodurch eine Oxidation der inneren Oberfläche des Gründungspfahls verhindert werden kann. Dadurch ist die Lebensdauer der Gründungsstruktur verbessert. Zudem können so weitere Korrosionsschutzmaßnahmen entfallen. Eine derartige Verschlusseinrichtung weist vorzugsweise einen Kopfdeckel zum Verschließen des oberen Endes des Gründungspfahls auf sowie eine Dichtungsmasse, beispielsweise Beton, zum Abdichten des Kopfdeckels gegen den Gründungspfahl.

Bei dem oben beschriebenen Verfahren zum Errichten einer Gründungsstruktur wird ein Ausrichtstempel eingesetzt, der bevorzugt wie folgt ausgebildet ist: Der Ausrichtstempel weist ein Stempelrohr, einen mit dem Stempelrohr verbundenen Stempelkopf sowie eine Stützeinrichtung auf. Das Stempelrohr bildet den Kanal zum Zuführen des Füllmaterials. Der Stempelkopf weist eine Kontaktfläche auf zum In-Kontakt-Kommen mit dem Gründungspfahl. Vorzugsweise weist der Stempelkopf einen Zentriervorsprung auf, so dass der Stempelkopf und somit der Ausrichtstempel auch bei einem wenig exakten Einführen des Ausrichtstempels in den Gründungspfahl der Stempelkopf zentriert auf dem Rammpfahl aufsitzt. Der Rammpfahl kann an dem oberen Ende durch das Rammen leicht beschädigt sein. Daher ist es besonders vorteilhaft, dass der Stempelkopf einen Zentriervorsprung aufweist, so dass der Stempelkopf auch bei einem beschädigten Rammpfahl zentriert auf diesem aufsitzt. Die Stützeinrichtung ist vorzugsweise an einem oberen Ende des Ausrichtstempels, bevorzugt benachbart zum oberen Ende des Gründungspfahls an dem Stempelrohr oder einem Stempelkörper angeordnet. Die Stützeinrichtung ist vorzugsweise höhenverstellbar bzw. ortsverstellbar an dem Stempelrohr bzw. einem Stempelkörper angeordnet. Die Stützeinrichtung weist bevorzugt eine oder mehrere Hydraulikzylinder auf, welche dazu eingerichtet sind, mit einem Stützabschnitt des Gründungspfahls in Kontakt zu kommen, um diesen relativ zu dem Stempelkopf, dem Stempelrohr und/oder dem Rammpfahl zu verschieben. Hydraulikzylinder sind besonders bevorzugt, da mittels diesen hohe Lasten aufgenommen werden können und eine exakte Verschiebung des Gründungspfahls zu dem Rammpfahl auch um kleine Wege möglich ist. Bevorzugt weist der Ausrichtstempel, insbesondere das Stempelrohr und/oder der Stempelkopf Führungsflächen und/oder Führungsöffnungen zum Leiten von Füllmaterial auf. Durch derartige Führungsflächen und/oder Führungsöffnungen ist Füllmaterial gezielt in einen Spalt zwischen Rammpfahl und Gründungspfahl, in das Innere des Rammpfahls und/oder in einen Abschnitt unterhalb und oberhalb des Überdeckungsbereichs einfüllbar. Durch einen derartigen Ausrichtstempel ist ein Gründungspfahl und somit auch eine Gründungsstruktur auf einfache Weise ausrichtbar. Der Ausrichtstempel ist wiederverwendbar, er wird nur als Werkzeug eingesetzt. Er kann auf einem Montageschiff mitgeführt werden und bei Bedarf, d.h. bei einer unzureichend ausgerichteten Aufstellung einer Gründungsstruktur, eingesetzt werden. Da der Ausrichtstempel von oberhalb des Meeresspiegels in das Innere des Gründungspfahls hinabgelassen wird und eine Arbeit nur am oberen Ende des Ausrichtstempels notwendig ist, entfallen aufwändige Tauchereinsätze. Dadurch ist das Errichten der Gründungsstruktur wesentlich kostengünstiger und schneller möglich.

Ausführungsbeispiele der Erfindung, aus denen sich weitere erfinderische Merkmale ergeben, sind in den Zeichnungen dargestellt. Es zeigen:
Fig. 1: eine Ansicht einer erfindungsgemäßen Gründungsstruktur,
Fig. 2: eine Ansicht eines Teilabschnittes eines zur Verankerung im Meeresboden verwendeten Gründungspfahles und des darin geführten Rammpfahles im Schnitt,
Fig. 3: eine Ansicht eines Gründungspfahls samt Rammpfahl mit einem im Inneren des Gründungspfahls angeordneten Ausrichtstempel,
Fig. 4: eine Ansicht eines oberen Endes eines Gründungspfahles in einem verschlossenen Zustand,
Fig. 5: eine Detailansicht eines Ausschnitts aus Fig. 4, und
Fig. 6: eine Vollschnitt-Gesamtdarstellung eines Gründungspfahls.

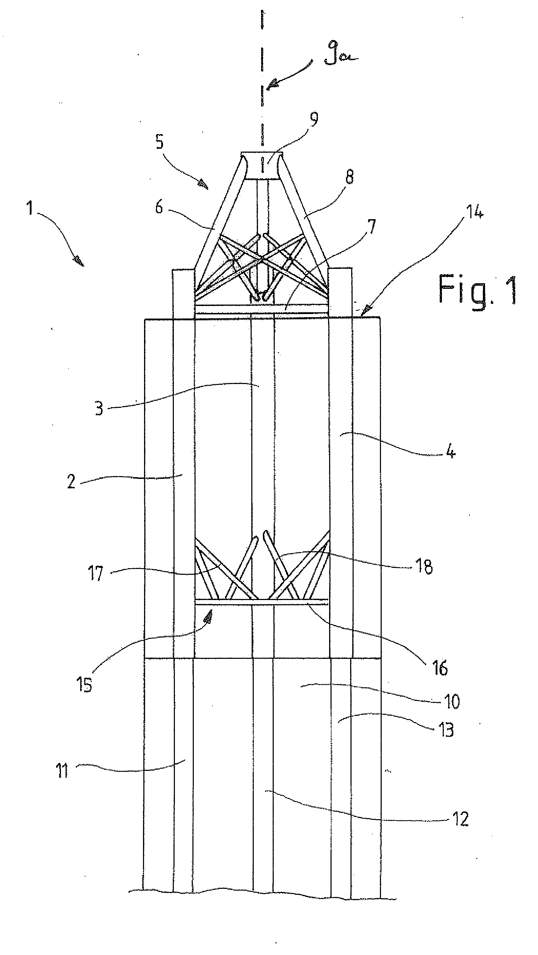

Mit 1 (Fig. 1) ist eine Gründungsstruktur für eine Offshore-Windenergieanlage bezeichnet, welche drei senkrecht verlaufende Gründungspfähle 2, 3, 4 und eine Stützkonstruktion 5 mit einer Vielzahl von Stäben 6, 7, 8 und mit einer Zentralaufnahme 9 für den Turm der nicht dargestellten Windenergieanlage aufweist. Die Gründungspfähle 2, 3, 4 stehen auf dem Meeresboden 10 auf, aus denen fest damit verbundene Rammpfähle 11, 12, 13 zur Verankerung im Meeresboden herausragen. Die Gründungspfähle 2, 3, 4 sind parallel zueinander angeordnet. Um eine sichere Verankerung zu gewährleisten, weisen die Rammpfähle 11 bis 13 einen in den Meeresboden gerammten Abschnitt auf, der etwa der Wassertiefe am Aufstellort entspricht. Die Stützkonstruktion 5 verbindet gleichzeitig die oberen bzw. freien Enden der Gründungspfähle 2, 3, 4 oberhalb der Wasserlinie 14 untereinander, so dass durch Wind- und Wellenlasten auf die Gründungsstruktur 1 oder die Windenergieanlage wirkende Kräfte vorteilhaft auf alle drei Gründungspfähle 2 bis 4 und deren Rammpfähle 11 bis 13 verteilt werden. Zusätzlich ist in einer vorbestimmten Wassertiefe oberhalb des Meeresbodens 10 eine zweite Stützkonstruktion 15 mit Stäben 16, 17, 18 vorgesehen, welche die drei Gründungspfähle 2 bis 4 wahrend des Verbringens an den Aufstellort oder während des Rammens vorteilhaft zueinander fixiert. Sowohl die Gründungspfähle 2 bis 4 und die Rammpfähle 11 bis 13 als auch die Pfosten bzw. Stäbe 6 bis 8 der Stützkonstruktion 5 weisen vorzugsweise eine zylindrische Ausgestaltung auf.

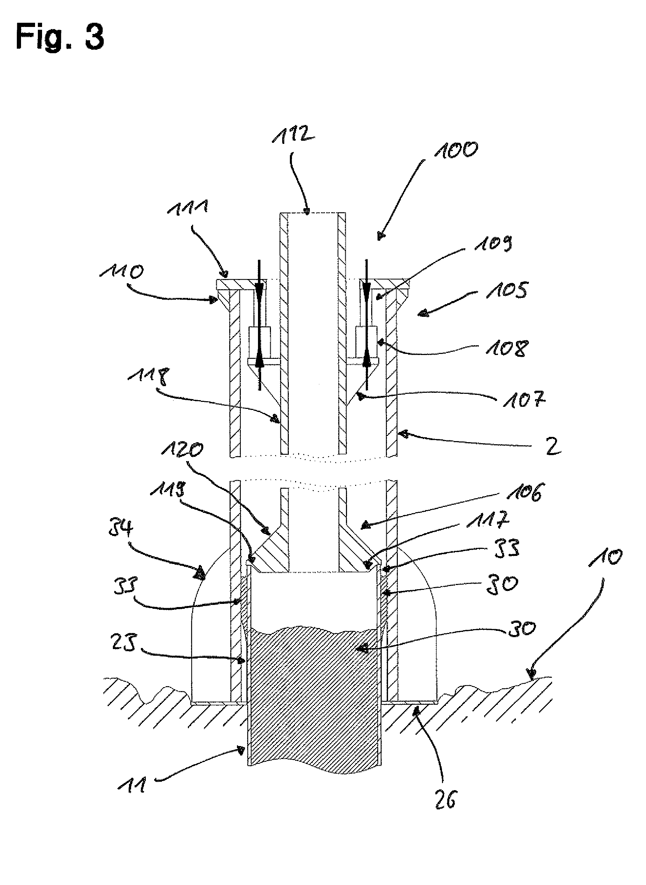

Die Zentralachse 9a der Zentralaufnahme 9 ist exakt vertikal ausgerichtet. Weist die Zentralachse 9a nach dem Aufstellen der Gründungsstruktur eine Abweichung zu der Vertikalen auf, die eine vorbestimmte Abweichung (beispielsweise 1 Grad) übersteigt, ist es bevorzugt die Gründungsstruktur wie weiter unter beschrieben mittels eines Ausrichtstempels 100 (siehe Figur 3) auszurichten.

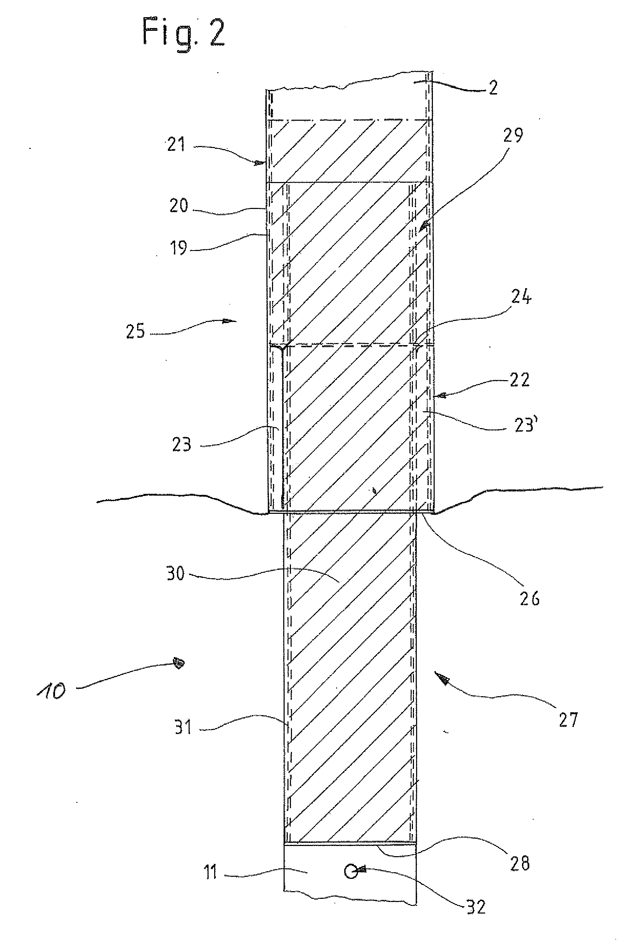

Fig. 2 zeigt eine Teilansicht eines der Gründungspfähle 2 bis 4 mit einem der darin aufgenommenen Rammpfähle 11 bis 13 im Schnitt und soll insbesondere deren Aufbau näher verdeutlichen. Jeder der Gründungspfähle 2 bis 4 weist eine Wandung aus mehreren Lagen 19, 20, 21 unterschiedlichen Materials auf. Zwischen der inneren, bevorzugt metallischen Lage 19 und der äußeren, metallischen Lage 20 ist eine Zwischenlage 21 aus einem Kernwerkstoff, wie zum Beispiel Beton, eingebracht. Jeder Gründungspfahl 2 bis 4 weist in seinem Fußbereich eine seinen freien Querschnitt an der inneren Mantelfläche verringernde Führung 22 für den Rammpfahl auf, wodurch das Verlaufen der Rammpfähle während des Rammens vermieden ist. Die Führung ist dabei mittels vier, an der inneren Lage 19 eines Gründungspfahles angeordneten Blechen 23, 23' ausgebildet, die in einem Winkel von 90 Grad zueinander an der Innenseite der inneren Lage in Längsrichtung verlaufen und sich radial nach innen erstrecken. Zur Ausbildung einer stabilen Endlage der Rammpfähle 11 bis 13 in einem jeweiligen Gründungspfahl 2 bis 4 ist an der Außenseite jedes Rammpfahls in einem vorbestimmten Abstand unterhalb des oberen Endes ein ringförmiger Anschlag 24 vorgesehen, der auf den oberen Enden der Bleche 23, 23' der Führung 22 zu liegen kommt, so dass Abschnitte der beiden Pfähle zueinander einen Überdeckungsbereich 25 einer vorbestimmten Länge ausbilden. Dieser Anschlag 24 kann ebenso entfallen.

An der Unterseite jedes Gründungspfahles ist des Weiteren ein Bodenring 26 mit einer Dichtung zum Abdichten des Führungsspaltes zum Rammpfahl vorgesehen. Auch diese Dichtung kann je nach Anwendung entfallen. Sie ist für die Erfindung nicht erforderlich. Jeder Rammpfahl 11 bis 13 weist einen abgegrenzten Rammpfahlkopf 27 auf, der von einem Schott 28 begrenzt ist, welches von dessen oberen Ende in einem etwa die doppelte Länge des Überdeckungsbereiches 25 betragenden Abstand dessen freien, inneren Querschnitt versperrend angeordnet ist. Sowohl der Rammpfahlkopf 27 oberhalb des Schotts 28 als auch der Spalt 29 zwischen der Außenseite des Rammpfahles und der Innenseite des Gründungspfahles sowie das Teilstück des Gründungspfahles oberhalb des Überdeckungsbereiches 25 sind mit einem aushärtenden Füllmaterial 30 verfüllt. Zur Verbesserung der Zugfestigkeit des Füllmaterials 30 ist zumindest abschnittsweise auf der Innenseite der Rammpfahlwandung eine Bewehrung 31 aus beispielsweise Stäben angeordnet. Jeder Rammpfahl 11 bis 13 weist des Weiteren unterhalb des Schotts 28 mindestens einen Durchbruch 32 in seiner Pfahlwandung zur vorteilhaften Entlüftung während des Rammens in den Meeresboden 10 auf.

Figur 3 illustriert einen auf dem Meeresboden 10 aufgestellten Gründungspfahl 2, mitsamt eingerammtem Rammpfahl 11 und in den Gründungspfahl 2 eingeführten Ausrichtstempel 100. Gleiche und ähnliche Elemente sind mit gleichen Bezugszeichen versehen. Insofern wird vollumfänglich auf die obige Beschreibung Bezug genommen.

Der Gründungspfahl 2 ist gemäß diesem Ausführungsbeispiel, welches im Wesentlichen der Illustration des Ausrichtstempels 100 dient, als einlagiger, einwandiger Gründungspfahl ausgebildet. Bevorzugt ist er jedoch entsprechend den obigen Beschreibungen als mehrlagiger bzw. Sandwich-Pfahl ausgebildet. Der Gründungspfahl 2 weist an seinem unteren Ende (auf Figur 3 bezogen) einen Bodenring 26 auf, der eine Aufstellfläche für den Gründungspfahl 2 bildet. Der Bodenring 26 bildet dabei eine radiale Vergrößerung des Gründungspfahls 2, sodass dieser weniger stark in den Meeresboden 10 einsinken kann. Der Bodenring 26 ist mittels Versteifungsblechen 34 gegen den Gründungspfahl 2 abgestützt. Die Versteifungsbleche 34 können bei einem mehrlagigen Gründungspfahl an der äußeren Lage, oder auch an der inneren Lage befestigt sein und sich durch einen Schlitz in der äußeren Lage hindurch nach Außen erstrecken.

Radial nach Innen gerichtet sind am unteren Ende des Gründungspfahls 2 Führungsbleche 23 angeordnet, zum Führen des Rammpfahls 11 beim Rammen. Die Führungsbleche 23 bilden zudem später beim Verfüllen mit Füllmaterial 30 eine Bewährung zur besseren Verbindung des Gründungspfahls zum Füllmaterial 30 und so auch zum Rammpfahl. Zusätzlich sind sowohl am Gründungspfahl 2 als auch am Rammpfahl 11 Bewährungsstäbe 33 angeordnet, welche auch als Shear-Keys bezeichnet werden. Der Rammpfahl 11 weist in diesem Ausführungsbeispiel keinen Anschlag zum Anschlagen gegen die Führungsbleche 23 auf, da so der Gründungspfahl 2 später leichter relativ zu dem Rammpfahl 11 verschiebbar ist, um die Gründungsstruktur 1 auszurichten.

Der Ausrichtstempel 100 weist ein Stempelrohr 118, einen Stempelkopf 106 und eine Stützeinrichtung 105 auf. Der Stempelkopf 106 weist an seinem unteren Ende, bezogen auf Figur 3, einen Zentriervorsprung 117 auf zum zentrierten In-Kontakt-Kommen des Stempelkopfes 106 mittels der Kontaktfläche 119 mit dem oberen Ende des Rammpfahls 11. Der Zentriervorsprung 117 ist im Wesentlichen kegelstumpfförmig gebildet. So ist der Ausrichtstempel 100 für verschiedene Durchmesser von Rammpfahlrohren einsetzbar. Auch wenn das obere Ende des Rammpfahles 11 durch das Rammen beschädigt, verbogen oder ausgekragt ist, ist der Stempelkopf 106 zentriert mit dem Rammpfahl 11 in Kontakt bringbar. Das Stempelrohr 118 weist an seinem oberen Ende einen Füllmaterialeinlass 112 auf, der oberhalb des Meeresspiegels angeordnet ist. Durch das Stempelrohr 118, welches auch einen Stempelkörper bildet, ist Füllmaterial auf einfache Weise von oberhalb des Meeresspielgels in das Innere des Rammpfahls 11 einführbar. Dies ist gut aus Figur 3 ersichtlich.

In der Nähe des oberen Endes des Gründungspfahls 2 ist an dem Stempelrohr 118 die Stützeinrichtung 105 angeordnet. Diese besteht gemäß diesem Ausführungsbeispiel aus Stützabschnitten 107, welche an dem Stempelrohr höhenverstellbar befestigt sind sowie Hydraulikzylinder mit einem unteren Teil 108 und einem oberen Teil 109. Auf dem oberen Teil 109 des Hydraulikzylinders ist der Gründungspfahl 2 abgestützt. Dazu weist der Gründungspfahl 2 am oberen Ende eine lösbar an diesem befestigte Oberplatte 111 auf, die mittels eines Stützrings 110 an dem Gründungspfahl angeordnet ist. Diese Oberplatte 111 kann nach dem Ausrichten mitsamt dem Stützring 110 von dem Gründungspfahl 2 entfernt werden und beim Ausrichten eines anderen weiteren Gründungspfahls wieder zum Einsatz kommen. Die gesamte Montage der Stützeinrichtung 105, des Stützrings 110 und der Oberplatte 111 erfolgt oberhalb des Meeresspiegels und bedarf somit nicht des Einsatzes von Tauchern. Die Hydraulikzylinderteile 108, 109 sind nicht mit Meerwasser in Kontakt und müssen somit keinen speziellen korrosiven Schutz aufweisen.

Das Ausrichten kann dann wie folgt ablaufen: In zwei der drei Gründungspfähle 2, 3, 4 wird ein Ausrichtungsstempel 100 hinabgelassen, dessen Stempelkopf 106 durch den konischen Zentriervorsprung 117 exakt auf dem oberen Enden der Rammpfähle 11, 12, 13 ruht. Die konische Zentrierung ist auch dann wirksam, wenn der Kopf des Rammpfahles 11, 12, 13 durch den Rammvorgang leicht beschädigt sein sollte.

Anschließend wird die Stützeinrichtung 105 fertig montiert, sodass der Gründungspfahl 2, 3, 4 mittels dieser an dem Ausrichtstempel 100 abstützbar ist. Die Hydraulikzylinder 108. 109 werden nach der Montage aller Komponenten durch eine Druckbeaufschlagung ausgefahren. Die von ihnen erzeugte Kraft wirkt auf den Ausrichtstempel 100. Die Abstützung des Stempelkopfes 106 auf dem eingeschlagenen Rammpfahl 11, 12, 13 bewirkt, dass sich die Gründungsstruktur bzw. die Gründungspfähle samt Stützkonstruktion an dieser Stelle anhebt. Durch den Einsatz zweier Ausrichtstempel 100 wird die Gründungsstruktur, deren Gründungspfähle den Eckpunkten eines Dreiecks entsprechen, an zwei der Eckpunkte angehoben und kann so exakt senkrecht ausgerichtet werden.

Sobald die erwünschte Position erreicht wurde, wird durch das Stempelrohr 118 und seitlich des Stempelrohres 118 Beton 30 in ausreichender Menge eingefüllt. Der durch die Öffnung des Stempelrohres 118 eingefüllte Beton 30 wird nach dem Abbinden den Rammpfahl 11, 12, 13 verfestigen und das Innere des Gründungspfahls 2, 3, 4 gegen das Eindringen gegebenenfalls hervorgeschwemmten Seebodens aus dem Inneren des Gründungspfahles 2, 3, 4 abdichten.

Der seitlich entlang des Stempelrohres 118 herabfließende sehr dünnflüssige Beton gleitet an der Außenseite des Stempelkopfes 116 über die Schräge 120 ab und fließt somit in die vorgesehene Position im Zwischenraum zwischen dem Gründungspfahl 2, 3, 4 und dem Rammpfahl 11, 12, 13. Nach dem Abbinden des Betons werden der Ausrichtstempel 100 und die Oberplatte 111 zusammen mit der Stützeinrichtung 105 entfernt.

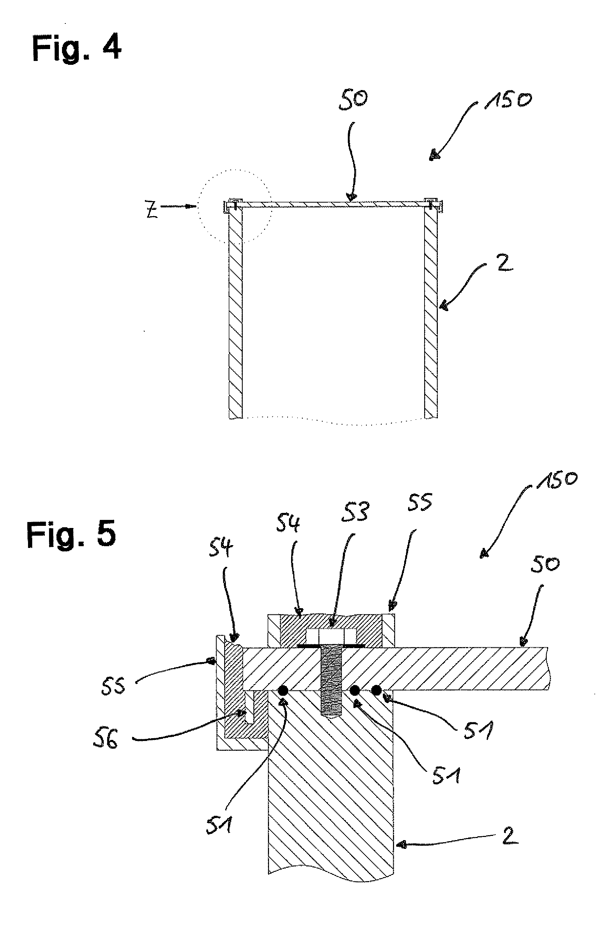

Nach Ausrichten der Gründungspfähle 2 und Entfernen des Ausrichtstempels 100 aus dem Gründungspfahl 2 sowie vorzugsweise auch Entfernen der Oberplatte 111 und des Stützrings 110 ist es vorteilhaft, das obere Ende des Gründungspfahls 2 zu verschließen. Eine Verschlusseinrichtung 150 ist in den Figuren 4 und 5 illustriert. Die Verschlusseinrichtung 150 weist demnach im Wesentlichen einen Kopfdeckel 150 auf, der im Wesentlichen plattenförmig ausgebildet ist und einen Radius aufweist, der weitestgehend dem Radius des Gründungspfahls 2 entspricht bzw. etwas größer ist. Wie aus der Detailansicht in Figur 5 zu erkennen, ist für die Abdichteinrichtung 150 am oberen Ende des Gründungspfahls 2 außenliegend ein Dichtungshaltering 55 angeordnet, der einen ringförmigen Kanal für Dichtmasse 54 bildet. An dem Kopfdeckel 50 ist ein ringförmiger axialer Vorsprung 56 angeordnet, der in den ringförmigen Kanal des Dichtungshalterings 55 eingreift. Um den Vorsprung 56 herum ist der Dichtungshaltering 55 mit Dichtmasse 54 verfüllt, welche den Innenraum des Gründungspfahls 2 gegenüber der Umgebung verschließt. Zusätzlich ist der Kopfdeckel 50 mittels Schrauben 53 mit dem Gründungspfahl 2 verschraubt. Die Schrauben 53 sind ebenfalls mit Dichtmasse 54 abgedichtet, welche von einem zweiten Dichtungshaltering 55 gestützt wird. Ferner sind zwischen Kopfdeckel 50 und Gründungspfahl 2 Dichtungsringe 51 angeordnet zur zusätzlichen Absicherung. So ist eine luftdichte Versiegelung des Innenraums des Gründungspfahls 2 gegenüber der Umgebung geschaffen, welche die gesamte Lebensdauer der Gründungsstruktur überdauern kann und den Innenraum des Gründungspfahls 2 dauerhaft gegenüber Luftaustausch mit der Umgebung verschließt.

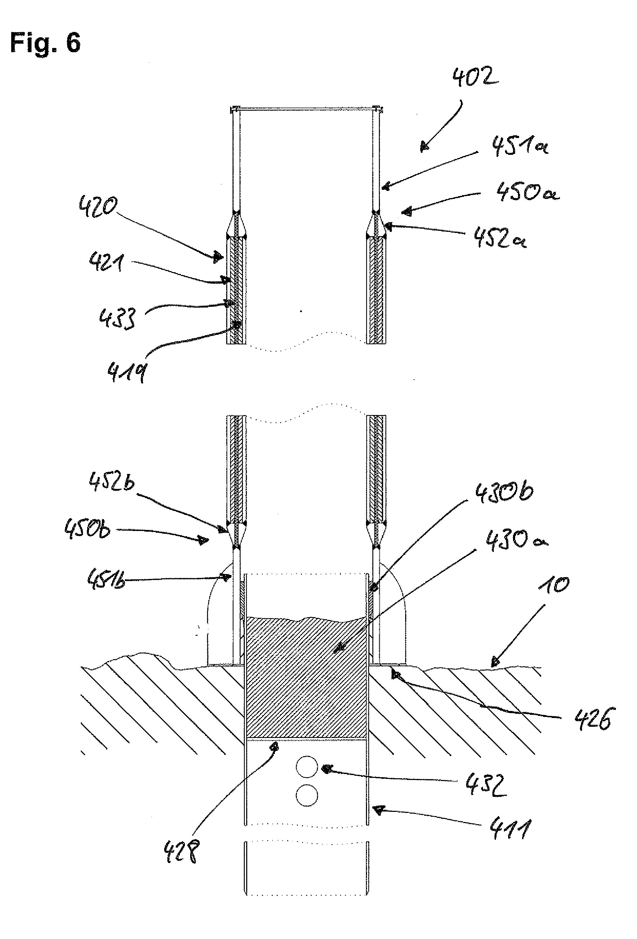

Figur 6 zeigt einen Gründungspfahl 402 in einem Vollschnitt. Gleiche und ähnliche Bezugszeichen sind mit um 400 heraufgesetzten Bezugszeichen versehen, insofern wird vollumfänglich auf die obige Beschreibung Bezug genommen. Der Gründungspfahl 402 ist als Sandwichpfahl ausgebildet und weist ein die innere Lage 419 bildendes inneres Rohr, ein die äußere Lage 420 bildendes äußeres Rohr auf. An jeweils axialen Enden des inneren und äußeren Rohres 419, 420 ist jeweils ein Sandwich-Anschluss 450a, 450b angeordnet. Der Sandwich-Anschluss 450a, 450b weist einen im Querschnitt konisch geformten Ringflansch 452a, 452b auf, der das innere und äußere Rohr 419, 420 miteinander verbindet. Auf der anderen Seite ist der Ringflansch 452a, 452b mit einem Rohranschluss 451 a, 451 b verbunden, der als massives Rohr ausgebildet ist. In dem Zwischenraum zwischen den Rohren 419, 420 sind Bewehrungsstäbe 433 angeordnet, die sich entlang der Längsachse erstrecken und durch Ausnehmungen in den Ringflanschen 452a, 452b sich hindurch erstrecken. Diese Bewährungsstäbe 433 sind ebenfalls mit den Anschlussrohren 451 a, 451 b verbunden.

Der Gründungspfahl 402 ist auf dem Meeresboden 10 aufgestellt. Im Inneren des Gründungspfahls 402 ist ein Rammpfahl 411 angeordnet, der in der Nähe seines Kopfendes ein Schott 428 aufweist und zwei unter dem Schott 428 angeordnete Entlüftungsöffnungen 432. Der obere Bereich des Rammpfahls 411 ist mit Beton 430a verfüllt. Vorzugsweise ist Beton 430a zu einer Höhe eingefüllt, die etwa zwei Mal dem Durchmesser des Rammpfahls 411 entspricht. Auch in dem Zwischenraum zwischen dem Rammpfahl 411 und dem Gründungspfahl 402 ist Beton 430b eingefüllt, um eine feste Verbindung zwischen den beiden Pfählen 402, 411 zu bilden.

## Patentansprüche

1. Gründungsstruktur für eine Offshore-Windenergieanlage mit zumindest mehreren Gründungspfählen, wobei jeder Gründungspfahl einen wenigstens abschnittsweise in seinem Inneren geführten Rammpfahl zur Verankerung im Meeresboden aufweist, und mit mindestens einer Stützkonstruktion zur Aufnahme eines Turms einer Windenergieanlage, wobei die Stützkonstruktion die oberen Enden der Gründungspfähle untereinander verbindet,
**dadurch gekennzeichnet, dass** der Gründungspfahl (2, 3, 4) und der Rammpfahl (11, 12, 13) auf einem vorbestimmten Längenabschnitt einen Bereich einer Überdeckung aufweisen, wobei im Überdeckungsbereich (25) der Pfähle der Spalt (29) zwischen den Pfählen sowie in einem Teilstück unterhalb und oberhalb des Überdeckungsbereiches (25) der freie, innere Querschnitt der Pfähle (2, 3, 4, 11, 12, 13) mit einem aushärtenden Füllmaterial (30) verfüllt sind.

2. Gründungsstruktur nach Anspruch 1,
**dadurch gekennzeichnet, dass** der Gründungspfahl (2 bis 4) einen Bodenring (26), vorzugsweise mit einer den Spalt (29) zum Rammpfahl (11, 12, 13) abdichtenden Dichtung aufweist.

3. Gründungsstruktur nach einem der Ansprüche 1 bis 2,
**dadurch gekennzeichnet, dass** der Gründungspfahl (2 bis 4) ein seine innere Mantelfläche ausbildendes Innenrohr und ein seine äußere Mantelfläche ausbildendes Außenrohr aufweist, wobei zwischen Innenrohr und Außenrohr ein Kernwerkstoff angeordnet ist.

4. Gründungsstruktur nach einem der Ansprüche 1 bis 3,
**dadurch gekennzeichnet, dass** der Rammpfahl (11 bis 13) ein im Abstand unterhalb des Überdeckungsbereiches (25) angeordnetes Schott (28) aufweist, welches den freien, inneren Querschnitt des Rammpfahles (11, 12, 13) verschließt.

5. Gründungsstruktur nach Anspruch 4,
**dadurch gekennzeichnet, dass** der Rammpfahl (11 bis 13) in seiner Pfahlwandung unterhalb des Schotts (28) mindestens einen Durchbruch (32) zur Entlüftung aufweist.

6. Gründungsstruktur nach einem der Ansprüche 2 bis 5,
**dadurch gekennzeichnet, dass** sich der Bodenring (26) radial über den Gründungspfahl (2, 3, 4) hinaus erstreckt und mittels Stützstreben (34) mit diesem verbunden ist.

7. Gründungsstruktur nach einem der Ansprüche 1 bis 6,
**dadurch gekennzeichnet, dass** der Rammpfahl (11 bis 13) zumindest abschnittsweise auf der Innenseite der Pfahlwandung mit Bewehrung (31) ausgerüstet ist.

8. Verfahren zum Errichten einer Gründungsstruktur für eine Offshore-Windenergieanlage, bei dem mehrere, vorzugsweise drei, mit Rammpfählen (11, 12, 13) ausgerüstete Gründungspfähle (2, 3, 4) mit mindestens einer aus Stäben (6, 7, 8, 16, 17, 18) bestehenden Stützkonstruktion (5, 15) zu einem Konstruktionsteil vormontiert werden, das vormontierte Konstruktionsteil zum Aufstellort transportiert und mit seinen Gründungspfählen (2 bis 4) voran auf dem Meeresboden (10) abgesetzt wird, anschließend die Rammpfähle (11 bis 13) in den Meeresboden (10) gerammt und ein im Meeresboden (10) verankertes Gründungsteil erzeugt werden,
**dadurch gekennzeichnet, dass** abschließend in das Gründungsteil ein aushärtendes Füllmaterial (30) in zumindest den Überdeckungsbereich (25) der Pfähle und einen Abschnitt oberhalb und unterhalb des Überdeckungsbereichs eingefüllt und somit eine feste Gründungsstruktur (1) ausgebildet wird.

9. Verfahren nach dem Oberbegriff von Anspruch 8 oder nach Anspruch 8, **gekennzeichnet durch** den Schritt:
- Ausrichten des Gründungsteils derart, dass eine Zentralachse einer Zentralaufnahme (9) für die Aufnahme des Turms einer Windenergieanlage im Wesentlichen vertikal ausgerichtet ist,
wobei ein Füllmaterial (30) vorzugsweise nach dem Ausrichten eingefüllt wird.

10. Verfahren nach Anspruch 9,
**dadurch gekennzeichnet, dass** das Ausrichten umfasst:
Verschieben wenigstens eines, vorzugsweise zwei der drei, Gründungspfähle (2, 3, 4) relativ zu dem Rammpfahl (11, 12, 13), mittels eines vollständig innerhalb und/oder oberhalb des Gründungspfahls (2, 3, 4) angeordneten Ausrichtstempels (100).

11. Verfahren, insbesondere nach Anspruch 10 oder mindestens einen der vorstehenden Ansprüche 9 bis 11,
ferner umfassend die Schritte:
- Einführen des Ausrichtstempels (100) von einem oberen Ende des Gründungspfahls (2, 3, 4), welches sich oberhalb des Meeresspiegels befindet, in den Gründungspfahl (2, 3, 4) hinein;
- In Kontakt kommen eines Stempelkopfes (106) des Ausrichtstempels (100) mit dem Rammpfahl (11, 12, 13);
- In Eingriff bringen einer Stützeinrichtung (105) des Ausrichtstempels (100) mit dem Gründungspfahl (2, 3, 4)
- Strecken eines Abschnitts des Ausrichtstempels (100), um den Gründungspfahl (2, 3, 4) relativ zu dem Rammpfahl (11, 12, 13) zu verschieben.

12. Verfahren nach Anspruch 11,
**dadurch gekennzeichnet, dass** das Strecken des Ausrichtstempels (100) hydraulisch erfolgt.

13. Verfahren nach einem der Ansprüche 11 oder 12,
ferner umfassend den Schritt:
Einfüllen von Füllmaterial (30) durch einen Kanal (112) in dem Ausrichtstempel (100) hindurch in den Rammpfahl (11, 12, 13) und/oder den Überdeckungsbereich.

14. Verfahren nach einem der Ansprüche 8 bis 13
**gekennzeichnet durch** den Schritt:
Verschließen, vorzugsweise luftdichtes Versiegeln, des oberen offenen Endes wenigstens eines Gründungspfahls (2, 3, 4) mittels einer Verschlusseinrichtung (150).

15. Ausrichtwerkzeug, umfassend
einen Ausrichtstempel (100) mit einem Stempelrohr (118), einem mit dem Stempelrohr verbundenen Stempelkopf (106) zum in Kontakt kommen mit einem Rammpfahl (11, 12, 13), sowie eine Stützeinrichtung (105) zum Abstützen eines Gründungspfahls (2, 3, 4).
